# EUROPÄISCHE PATENTANMELDUNG

(11) **EP 0 903 634 A2**
(43) Veröffentlichungstag der Anmeldung: **24.03.1999**
(21) Anmeldenummer: 98117642.3
(22) Anmeldetag: 17.09.1998
(51) Int. Cl.: G03D 13/00

(54) **Spiralspeicher**

(30) Priorität: 23.09.1997 DE 29717019 U
(71) Anmelder: GRETAG IMAGING AG, CH-8105 Regensdorf (CH)
(72) Erfinder: Dünner, Albert, 8046 Zürich (CH); Fendt, Edmund, 5425 Schneisingen (CH); Frei, Hans, 5105 Auenstein (CH); Gassmann, Werner, 8116 Würenlos (CH)
(74) Vertreter: Schwabe - Sandmair - Marx

(57) **Zusammenfassung**

Die vorliegende Erfindung betrifft einen Speicher für Fotomaterial mit einer um eine Achse (30) drehbaren Basis (20, 120, 220), mit einer am Außenumfang der Basis angeordneten Zuführeinrichtung (16, 116), mit einer an der Achse (30, 130) der Basis (20, 120, 220) angeordneten Abzugseinrichtung (18, 118), wobei zwei Fotomaterialgürtel auf-/abgewickelt werden, und zwar einer nahe der Achse (30, 130) und einer nahe dem Außenumfang der Basis (20, 120), wobei eine Schleife (42) zwischen den Gürteln zu einem Fotomaterialaustausch vom Außengürtel auf den Innengürtel führt, wobei sich bevorzugt die Wickelrichtung umkehrt, wobei die Basis (20, 120) in zwei Abschnitte (12, 14; 112, 114; 212, 214) unterteilt ist, wobei der eine Abschnitt (14; 114; 214) den anderen Abschnitt (12; 112; 212) umgibt.

## Beschreibung

Die Erfindung betrifft einen Speicher für ein bandförmiges fotografisches Kopiermaterial, wie dieser aus der EP 0 730 199 A1 bekannt ist. Ein derartiger Speicher wird durch die im Oberbegriff des Anspruchs 1 aufgeführten Merkmale beschrieben.

Der gattungsgemäße Speicher wird beispielsweise in Großlabors eingesetzt, um den enormen Platzbedarf herkömmlicher Speicher zu erübrigen. Herkömmliche Speicher weisen eine Anordnung von vertikal oder horizontal verschiebbaren Rollen auf, um die das fotografische Material herumgeführt wird, wobei durch die horizontale oder vertikale Verschiebung der Rollen zueinander Kopiermaterial zwischengespeichert werden kann.

Hier nun sollte der gattungsgemäße Speicher als Ersatz für derartige herkömmliche Speicher eingesetzt werden. Jedoch treten bei dem gattungsgemäßen Speicher Probleme auf, die einen Einsatz des Speichers behindern können. Wird bei dem gattungsgemäßen Speicher Fotopapier von außen zugeführt, so wird dieses zunächst automatisch von außen in die Abführung eingefädelt, die in der Mitte des Speichers angeordnet ist. Sobald der Einfädelungsvorgang erfolgreich abgeschlossen worden ist, beginnt die Auflagescheibe des Speichers mit einer vorgegebenen Geschwindigkeit zu drehen, während Fotopapier von außen zur Speicherung zugeführt wird. Das Fotopapier wird unter Bildung einer Schleife in einem inneren Gürtel und in einem äußeren Gürtel gespeichert. Zwischen dem inneren Gürtel und dem äußeren Gürtel verbleibt ein Freiraum, in dem die Schleife wandern kann, wobei das Fotopapier, das ursprünglich von außen zugeführt und auf dem äußeren Gürtel außen aufgewickelt worden ist, über die wandernde Schleife von dem Außengürtel auf den Innengürtel übertragen wird, wobei sich die Wickelrichtung umkehrt. Entsprechend kann dann, wenn aus dem bekannten, gattungsgemäßen Speicher Fotopapier abgeführt werden soll, dieses vom Innenumfang des inneren Gürtels abgetragen werden.

Hierbei entstehen nun die Probleme, daß der Radius des äußeren Fotopapiergürtels zu groß werden kann, so daß der Speicher nur dann zuverlässig arbeitet, wenn er wenigstens zunächst überwiegend beladen und danach wenigstens wieder überwiegend entladen wird. In Zwischenzuständen kann es bei diesem Speicher zu Problemen kommen, wobei es auch eine Rolle spielt, daß beim Entladen des Speichers große Kräfte auf das Fotopapier einwirken können, die dieses zum Zerreissen bringen können, da große Reibungskräfte zu überwinden sind, wenn das Fotopapier aus dem inneren Gürtel über den Auszug aus dem Speicher entnommen wird.

Es ist die Aufgabe der vorliegenden Erfindung, einen Speicher zur Verfügung zu stellen, der die Nachteile des gattungsgemäßen Standes der Technik soweit als möglich ausräumt bzw. wenigstens Teile der besagten Probleme beseitigt.

Diese Aufgabe wird durch einen Speicher mit den im Anspruch 1 aufgeführten Merkmalen gelöst. Zweckmäßige Ausführungsformen des erfindungsgemäßen Speichers gehen aus den Unteransprüchen hervor. Ein besonders vorteilhafter Aspekt gemäß der Erfindung geht aus dem Anspruch 6 hervor.

Die gemäß der Erfindung zu erzielenden Vorteile beruhen darauf, daß die Auflageplattform, die hier auch als Basis bezeichnet wird, in zwei Abschnitte unterteilt werden kann, wobei der eine Abschnitt den anderen Abschnitt umgibt. Bei dieser Ausführung ist es möglich, sowohl den inneren Abschnitt als auch den äußeren Abschnitt unabhängig mit, falls gewünscht, verschiedenen Geschwindigkeiten zu drehen, wobei auch beide Abschnitte, beispielsweise über eine Kupplung, miteinander verriegelt werden können, um synchron gedreht zu werden. So können beim Befüllen des Speichers der äußere Abschnitt und der andere Abschnitt, d.h. der innere Abschnitt, miteinander verriegelt werden, um unter Bildung der Schleife den inneren Gürtel sowie den äußeren Gürtel aus Fotomaterial auszubilden. Falls der Speicher entladen werden soll, wird der innere Abschnitt gegenüber dem äußeren Abschnitt entriegelt und kann entsprechend der Auszugsgeschwindigkeit für das Fotomaterial gedreht werden, wodurch die auf das Fotomaterial einwirkenden Kräfte ganz erheblich reduziert werden können.

Dabei wird der Speicher gemäß der Erfindung, insbesondere zum Zwischenspeichern, wie folgt benutzt: Zunächst wird die Basis bzw. Auflagescheibe in einer vorgegebenen Zufuhrrichtung des Fotopapiers gedreht, während das Fotopapier zugeführt wird, so daß sich auf der Auflagescheibe der äußere Gürtel bildet. Auf der der Auszugseinrichtung bzw. Entladeeinrichtung nahen Seite der Basis bzw. der Auflagescheibe wird das Fotopapier relativ zu der Entladeeinrichtung wenigstens zeitweise festgehalten, nämlich dann, wenn lediglich Fotopapier zum Befüllen des Speichers zugeführt wird. Dabei wird die Zuführung des Fotopapiers so durchgeführt, daß sich auf der Basis zwischen dem zeitweise festgehaltenen Fotopapierabschnitt, d.h. dem inneren Gürtel, und dem der Basis zugeführten Fotopapierabschnitt, d.h. dem äußeren Gürtel, eine Schlaufe bildet. Zusammen mit der Zufuhr von Fotopapier wird die Schlaufe um die Entladeeinrichtung im Zentrum der Basis bzw. nahe der Achse der Basis herumgeführt. Dabei wird der zeitweise festgehaltene Fotopapierabschnitt, d.h. der innere Gürtel, um die Entladeeinrichtung bzw. die Achse oder Drehachse der Basis herum aufgewickelt. Beim Entladen des Speichers wird der wenigstens zeitweise festgehaltene Fotopapierabschnitt, d.h. der innere Gürtel, über einen Innenbereich der Basis bzw. über die Entladeeinrichtung abgeführt, wobei die Entladeeinrichtung beispielsweise Rollen umfaßt, über die der zeitweise festgehaltene Fotopapierabschnitt, d.h. der innere Gürtel, in einer Abführrichtung befördert wird. Dabei kann die Entladung sowohl durch eine Öffnung in der Basis nach unten vorgenommen werden als auch nach oben, je nachdem, ob in der Mitte der Basis nahe der Achse der Basis in der Basis eine Ausnehmung vorgesehen ist, durch die das Fotopapier abgeführt werden kann oder nicht. Um zu vermeiden, daß der Radius des äußeren Gürtels zu sehr anwächst und damit das Fotopapier innerhalb des Gürtels nach innen zur Achse der Basis gedrängt werden muß, könnte es für spezielle Zwecke auch in Frage kommen, die Zuführung von innen vorzunehmen und außen abzuführen. Mit dieser "Umkehrung" können Probleme im Bereich des inneren Gürtels bzw. Wickels auftreten, wenn das Fotopapier von dessem inneren Bereich zu dessem äußeren Bereich gedrängt werden muß.

Wie oben bereits angedeutet, wird beim Abführen vom inneren Gürtel der innere Abschnitt der Basis von dem äußeren Abschnitt der Basis entkoppelt. Entsprechend wird beim Zuführen über die Mitte der Basis und beim Abführen über die Peripherie der Basis der äußere Abschnitt der Basis von dem inneren Abschnitt entkoppelt und läuft entsprechend der Auszugsgeschwindigkeit entkoppelt von dem inneren Abschnitt der Basis mit dem abzuziehenden Fotopapier mit.

Zudem ist es natürlich möglich sowohl den inneren Abschnitt als auch den äußeren Abschnitt der Basis mit unterschiedlichen Geschwindigkeiten zu drehen. Hierdurch können die Durchmesserdifferenzen des inneren und des äußeren Gürtels kompensiert werden, wenn z.B. bei etwa 4-fachem Innenumfang des äußeren Gürtels gegenüber dem Außenumfang des inneren Gürtels der innere Abschnitt mit entsprechend mehr Umdrehungen gedreht wird, um eine ausreichende Übertragung an Fotomaterial von dem äußeren Gürtel auf den inneren Gürtel zu ermöglichen.

Eine weitere sehr vorteilhafte Ausgestaltung des Speichers gemäß der Erfindung ergibt sich, wenn einer der Abschnitte, insbesondere der Abschnitt, auf dem die Zuführung erfolgt, also etwa der äußere Abschnitt, eine Neigung zur Drehachse der Basis hin aufweist. Dabei kann der andere Abschnitt, also insbesondere der innere Abschnitt, eben ausgebildet sein, wobei es auch sinnvoll sein kann, daß der äußere Abschnitt auch lediglich bereichsweise mit einer Neigung ausgebildet ist, so daß beispielsweise von der Peripherie des äußeren Abschnittes bis etwa zur Mitte des äußeren Abschnittes eine Neigung beliebiger Art vorgesehen wird, die sich radial einwärts erstreckt, um dann in eine Ebene überzugehen, die mit der von dem inneren Abschnitt zur Verfügung gestellten Ebene wenigstens im wesentlichen übereinstimmt. Dadurch, daß der äußere Abschnitt wenigstens bereichsweise eine Neigung aufweist, die sich radial nach innen ergibt, wird das eingeführte Fotomaterial bzw. Fotopapier dazu neigen, die Neigung herabzugleiten. Dadurch wird während des Beladens des Speichers entstehende äußere Gürtel wenigstens über lange Zeit von einer den äußeren Abschnitt gegebenenfalls umgebenden Umrandung ferngehalten. Zusätzlich wird der äußere Gürtel durch die Schräge immer eine Neigung haben, sich bevorzugt beim Speichervorgang nach innen zu orientieren, so daß die Anlage des äußeren Gürtels an die etwa vorhandene Einfassung der Basis bzw. der Auflagescheibe lange hinausgezögert werden kann. Auch wird hierdurch die Durchmesservergrößerung beim äußeren Gürtel reduziert. Lediglich in dem Bereich, in dem sich die Schleife ausbildet, sollte in der Regel keine Neigung auf der Basis vorhanden sein, um das Fotopapier nicht unnötig zu belasten.

Entsprechend, falls das Beladen des Speichers vom Zentrum der Basis ausgeht und das Entladen des Speichers über die Peripherie der Basis erfolgt, sollte der innere Abschnitt mit einer entsprechenden Neigung versehen werden.

Die besagte Neigung kann gleichmäßig radial nach innen ausgebildet sein. Es ist jedoch auch möglich, die Neigung rund, konkav oder dergleichen auszubilden, beispielsweise, um dicht am Rand des äußeren bzw. inneren Abschnittes eine große Steigung bereitzustellen, die zum Bereich auf der Basis hin, wo sich die Schleife ausbildet, ausläuft und in eine Ebene bzw. in die Horizontale übergeht. Auf diese Weise ist es möglich, die automatische Beaufschlagung des äußeren bzw. inneren Gürtels mit einer höheren Kraft, die radial nach innen gerichtet ist, zu verursachen, wenn die Dicke des jeweiligen Gürtels dazu führt, daß dieser sich dem Rand der Basis bzw. der Einfassung der Basis nähert.

Zusätzlich in Kombination mit der Neigung wenigstens eines der Abschnitte, jedoch auch separat für sich, ist es möglich, an der äußeren Peripherie des äußeren Abschnittes bzw. des äußeren Gürtels aus Fotomaterial eine Andruckrolle bzw. Umlenkrolle vorzusehen, die eine radial auf der Basis nach innen ausgerichtete Kraft auf den äußeren Gürtel aus Fotopapier bzw. Fotomaterial ausübt. Diese Ausbildung hat separat bzw. unterstützend vergleichbare Auswirkungen und Vorteile, wie die Neigung wenigstens eines der Abschnitte der Basis, wie dies voranstehend erörtert worden ist.

Die besagte Rolle oder Walze kann etwa über eine Federeinrichtung radial nach innen zur Drehachse der Basis vorbelastet sein. Die besagte Rolle oder Walze kann nahe der Zuführeinrichtung oder direkt an deren Mündung angebracht sein, wobei die Zuführeinrichtung etwa als Schwenkarm mit einem Zuführkanal ausgebildet sein kann.

Natürlich können anstelle einer einzigen, beispielsweise federbelasteten Walze oder Rolle entlang der Peripherie der Basis bzw. des äußeren Abschnittes auch mehrere, wenigstens teilweise angetriebene Rollen oder Walzen vorgesehen sein, die eine radial nach innen gerichtete Kraft auf den äußeren Gürtel aus Fotomaterial ausüben.

Besonders zu bevorzugen ist es, wenn die Rollen bzw. Walzen mit der Zuführgeschwindigkeit des Fotopapiers synchronisiert angetrieben werden. Hierzu kann ein Riemen oder ein Band vorgesehen sein, der bzw. das die Rollen oder Walzen im Bereich oder außerhalb des Bereichs des Gürtels aus Fotomaterial umgibt und antreibt, wobei der Gürtel in dem Falle, in dem er die Walzen bzw. Rollen im Bereich des Außenumfangs des äußeren Gürtels umgibt, der Mündungsbereich der Zuführeinrichtung bzw. des diesem zugeordneten Schwenkarms freigehalten bleiben sollte. Falls die Walzen bzw. Rollen über einen außerhalb des Umfangsbereichs des äußeren Gürtels angeordneten Riemen angetrieben werden, braucht der Riemen im Mündungsbereich der Zuführeinrichtung bzw. des Schwenkarmes nicht umgelenkt bzw. nicht unterbrochen zu werden. Im Falle der Umlenkung bzw. Unterbrechung des Riemens bzw. des Bandes ist es erforderlich, daß der Riemen bzw. das Band besonders am radial nach innen gerichteten Umfangsbereich der Rollen bzw. Walzen aber ggfs. auch an deren zur Achse der Basis radial nach außen gerichteten Seite geführt wird, um so ein Endlosband bzw. einen Endlosriemen zu bilden, der an jedem Punkt des Außenumfanges des äußeren Gürtels mit synchroner Geschwindigkeit läuft. Dabei kann der Riemen bzw. das Band innen bspw. über Gegenrollen oder dgl. geführt werden, während die besagten Walzen bzw. Rollen die Führungsfunktion außen selbst übernehmen können.

Nachfolgend wird die vorliegende Erfindung anhand der beigefügten Figuren unter Bezugnahme auf bevorzugte Ausführungsformen näher erläutert. Dabei zeigen:
- Fig. 1: eine schematisierte Draufsicht auf eine Ausführungsform mit Merkmalen gemäß der Erfindung;
- Fig. 2: eine schematisierte Draufsicht auf eine andere Ausführungsform mit Merkmalen gemäß der Erfindung in einem bestimmten Funktionsstadium; und
- Fig. 3: einen Schnitt durch eine Ausführungsform mit Merkmalen gemäß der Erfindung.

In den Figuren sind gleiche oder wenigstens funktionsgleiche Bestandteile jeweils mit um 100 versetzt bezeichneten Bezugsziffern versehen worden (beispielsweise 14 entspricht 114 entspricht 214).

In der nachfolgenden Figurenbeschreibung werden auch weitere Aufgaben, Vorteile und Merkmale gemäß der Erfindung offenbart, die im Hinblick auf einen konkreten Stand der Technik als erfindungswesentlich eingeschätzt werden können.

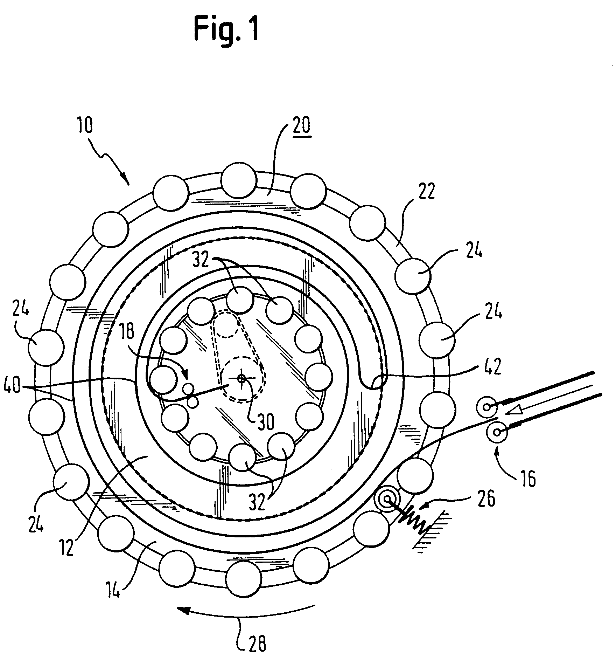

Fig. 1 zeigt einen Speicher 10 in einem teilweise befüllten Zustand. Die Fig. 1 zeigt, daß das Fotopapier 40, 42 am Außenbereich des Speicherinnenraums über die Zuführeinrichtung 16 in den Speicher eingeleitet wird. Bei dem dargestellten Speicher 10 ist es möglich, dem Speicher synchron Fotomaterial zuzuführen und Fotomaterial daraus abzuführen. Umgekehrt ist es auch möglich, ausschließlich Fotopapier abzuführen sowie ausschließlich Fotopapier zuzuführen, bis der Speicher gefüllt ist bzw. bis der Speicher leer ist.

Bei dem dargestellten Beispiel wird zunächst angenommen, daß der Speicher 10 lediglich über die Zuführeinrichtung 16 befüllt wird, während gegenwärtig über die Abzugseinrichtung bzw. Abführeinrichtung 18 kein Fotomaterial abgezogen wird, so daß die Rollen der Abzugseinrichtung 18 das Fotomaterial gegenwärtig lediglich festhalten.

Die Basis bzw. die Auflagescheibe 20 ist in zwei Abschnitte 12, 14 unterteilt, deren jeweilige Grenzlinie zueinander gestrichelt dargestellt ist. Die beiden Abschnitte, d.h. der innere Abschnitt 12 und der äußere Abschnitt 14, können miteinander synchron bewegt werden, beispielsweise indem die beiden Abschnitte 12, 14 über eine Kupplungseinrichtung, beispielsweise eine magnetische oder mechanische Kupplung, miteinander verbunden werden. Dementsprechend können die beiden Abschnitte 12, 14 auch unabhängig aktiv und/oder passiv bewegt werden. Am Außenumfang der Basis 20 bzw. des äußeren Abschnittes 14 der Basis 20 ist eine Halterung 22 angeordnet, die diverse passive Rollen 24 enthält. Beim Einführen von Fotomaterial über die Zuführeinrichtung 16 kann es dazu kommen, daß der äußere Gürtel aus Fotomaterial soweit anwächst, daß dieser außen anliegt, so daß erhöhte Reibungskräfte auftreten können. Dies kann durch die passiv mitlaufenden Rollen 24 wenigstens teilweise verhindert werden.

In bezug auf Einzelheiten der Zuführung 16, der Anordnung der Rollen 24 und des Abzugs 18 sei auf die gattungsgemäße Druckschrift EP 0 730 199 A1 verwiesen, deren Offenbarungsgehalt hiermit ausdrücklich in den vorliegenden Offenbarungsgehalt einbezogen wird. Teile und Merkmale sowie Merkmalskombinationen der gattungsgemäßen Druckschrift können hier ebenfalls beansprucht werden.

Nahe der Zuführeinrichtung 16 ist eine Andruckeinrichtung 26 vorgesehen, die hier in einer vereinfachten Ausführungsform aus einer Rolle oder Walze besteht, die gegebenenfalls angetrieben sein kann, wobei diese über eine Federeinrichtung gegen das Fotomaterial bzw. den Außenumfang des äußeren Gürtels aus Fotomaterial drückt, um auf diesem eine radial nach innen gerichtete Kraft auszuüben.

Die Andruckeinrichtung kann so angeordnet sein, daß sie mit dem äußeren Abschnitt 14 mitdreht. Sie kann aber auch an der Zuführeinrichtung angeordnet sein.

Nahe der Auszugseinrichtung 18 können auf einem Kreis um die Achse 30 der Basis 20 herum ebenfalls Rollen 32 vorgesehen werden, die prinzipiell die gleiche Funktion haben wie die außen vorgesehenen Rollen 24.

An der Achse 30 ist schematisch eine Antriebseinrichtung dargestellt, die in der gattungsgemäßen Druckschrift näher beschrieben wird und die im Hinblick auf die vorliegende Erfindung lediglich von geringerer Bedeutung ist. Wesentlich ist im Hinblick auf die vorliegende Erfindung, daß sowohl der äußere Abschnitt 14 als auch der innere Abschnitt 12 voneinander unabhängig bewegt werden können bzw. auch synchron oder miteinander verbunden bewegt werden können. Hierzu müssen natürlich entsprechende Antriebe etc. vorhanden sein. Gleichermaßen ist es erforderlich, eine Steuerung vorzusehen, die den inneren Abschnitt 12 und den äußeren Abschnitt 14 der Basis 20 passend steuert.

Anstelle der einen Andruckeinrichtung 26 in Form einer Rolle können natürlich auch diverse Rollen um den Außenumfang des äußeren Gürtels herum verteilt angeordnet sein. Diese Rollen können durch einen Riemen miteinander synchronisiert angetrieben werden, wobei der Riemen ebenfalls auf den Außenumfang des äußeren Gürtels aus Fotomaterial einwirken kann.

Im Hinblick auf den Speicher 10, 100, 200 gemäß den Darstellungen der vorliegenden Anmeldung ist es klar, daß dieser sowohl für die Speicherung von fotoempfindlichen als auch für die Speicherung von bereits belichtetem/entwickeltem Fotomaterial verwendet werden kann. Falls noch lichtempfindliches Material gespeichert werden soll, umfaßt der Speicher selbstverständlich ein lichtdichtes Gehäuse, einen lichtdichten Einlaß sowie einen lichtdichten Auslaß. Es ist auch möglich, mehrere der dargestellten Speicher übereinander oder hintereinander anzuordnen, um die Speicherkapazität zu erhöhen. In diesem Fall müssen die Speicher entsprechend steuerungsmäßig miteinander verkoppelt werden.

Dementsprechend werden zwei Weichen am Einlaß und Auslaß des Speichers erforderlich, wenn dieser zwei Basen etwa übereinander umfaßt. Ferner ist es auch möglich beispielsweise den oberen Speicher von außen mit Fotopapier zu beschicken und dieses innen abzuziehen, während der darunterliegende Speicher von innen her beschickt wird, während das Fotopapier von außen abgezogen wird, oder umgekehrt.

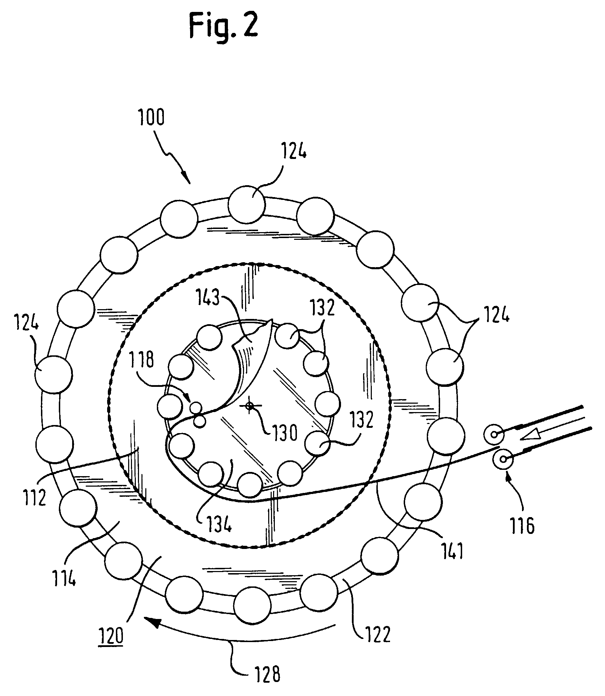

Unter Bezugnahme auf Fig. 2 umfaßt die Ausführungsform 100, wie auch die Ausführungsform 10 gemäß Fig. 1, eine Sockelplatte 122, an der Rollen 124 festgelegt sind, die passiv sind und dazu angeordnet sind, um den äußeren Gürtel aus Fotomaterial an dessen Außenumfang abzustützen, ohne daß übermäßige Reibungskräfte auftreten.

Die innenliegende Scheibe 134 kann sowohl gegenüber der Basis 120 bzw. den Abschnitten 112, 114 fix sein, d.h. sie dreht nicht mit, wenn die genannten Bestandteile bewegt werden, oder aber anstelle der Scheibe 134 ist eine Ausnehmung vorgesehen. In dem Fall, däß die Scheibe 134 vorgesehen ist, wird das Fotomaterial von der dargestellten Ebene der Basis 120 nach oben weggeführt, wie dies durch den Fotomaterialabschnitt 143 angedeutet wird. In dem Falle, daß anstelle der Platte 134 lediglich eine Ausnehmung vorgesehen ist, kann das Fotomaterial 143 auch nach unten abgeführt werden, wobei dann natürlich die Abzugseinrichtung 118 entsprechend anders ausgerichtet bzw. angeordnet sein muß. Wie auch bei der Ausführungsform gemäß Fig. 1 dreht die Basis 120 beim Beladen des Speichers 100 (und auch des Speichers 10) in Richtung des Pfeiles 128 (28 gemäß Fig. 1). Beim Einfädeln des Fotomaterial 141 wird dieses zunächst über die Zuführeinrichtung 116 in den Speicher 100 eingeführt, von den Rollen bzw. Klemmrollen der Abzugseinrichtung 118 erfaßt und anschließend in den besagten beiden Gürtelanordnungen mit dazwischen befindlicher Schleife im Speicher abgelegt. Unter Bezugnahme sowohl auf Fig. 1 als auch auf Fig. 2 sei ausgeführt, daß beim Drehen der Basis 120 bzw. 20 in Richtung des Pfeiles 28, 128, wie insbesondere aus Fig. 1 hervorgeht, sich ein äußerer Gürtel aus Fotomaterial bildet und von diesem über eine wandernde Schleife 42 (Fig. 1) auf einen inneren Gürtel überträgt, der dann über die Abzugseinrichtung 18, 118 aus dem Speicher 10, 100 abgezogen werden kann. Falls Fotomaterial abgezogen werden soll, kann der innere Abschnitt 12, 112 unabhängig von dem äußeren Abschnitt 14, 114 der Basis 20, 120 gedreht werden, um auf diese Weise die auf das Fotomaterial wirkenden Zugkräfte und Reigungskräfte günstig zu beeinflussen.

Zusammenfassend ist auszuführen, daß für einen Speichervorgang die Basis 20, 120 in einer vorgegebenen Zufuhrrichtung 128 des Fotomaterials gedreht wird, während das Fotomaterial zugeführt wird. Auf diese Weise bildet sich ein äußerer Gürtel auf der Basis 20, 120. Das Fotopapier wird relativ zu der Scheibe 134 bzw. der Abzugseinrichtung 118 beim Beladen festgehalten bzw. beim Entladen abgezogen bzw. ausgetragen. Dabei wird das Fotopapier derart zugeführt, daß sich auf der Basis 20, 120 zwischen dem wenigstens zeitweise festgehaltenen Fotomaterialabschnitt bzw. dem inneren Gürtel und der Basis 20, 120 eine Schlaufe 42 (Fig. 1) bildet, wobei mit der Zufuhr des Fotomaterials die Schlaufe 42 um die Scheibe 134 bzw. die dort vorhandene Ausnehmung, jedenfalls jedoch um die Auszugseinrichtung 118, 18, herumgeführt wird. Dabei wird, während die Schlaufe auf der Kreisbahn wandert, der wenigstens zeitweise festgehaltene Fotopapierabschnitt um die Scheibe 134 bzw. die entsprechende Ausnehmung, jedenfalls aber um die Abzugseinrichtung 18, 118, herum aufgewickelt.

Beim Austragen des Fotomaterials aus dem Speicher 10, 100 kann der innere Abschnitt 12, 112 der Basis 20, 120 unabhängig von dem äußeren Abschnitt 14, 114 in eine Drehbewegung versetzt werden.

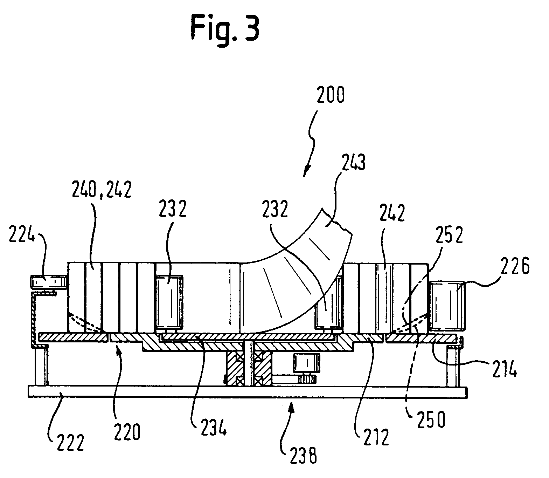

Die Fig. 3 zeigt eine weitere Ausführungsform eines Speichers 200 mit Merkmalen gemäß der Erfindung. Auch hier sind diverse Komponenten der voranstehenden Ausführungsformen 10, 100 ebenfalls angeordnet, wobei insbesondere Bestandteile der Ausführungsform gemäß Fig. 1 zum Einsatz gelangen.

Abweichend von Fig. 1 ist in Fig. 3 gesondert die Unterteilung der Basis 220 in einen inneren Abschnitt 212 und einen äußeren Abschnitt 214 zu erkennen. Im Bereich der Trennlinie zwischen den Abschnitten 212, 214 ist die Schlaufe 242 zu finden.

Festzuhalten ist, daß der äußere Abschnitt 214 der Basis 220 mit einer nach innen zum Mittelpunkt der Basis hin abfallenden Neigung ausgestattet sein kann. Diese Neigung kann einfach durch eine schematisch dargestellte Schrägung 252 oder aber auch durch eine teilkreisförmige Neigung 250 verwirklicht werden, um dem äußeren Gürtel aus Fotomaterial eine Orientierung zur Mitte der Basis 220 hin aufzuzwingen.

Auch hier sei in bezug auf generelle Funktionsweisen des Speichers auf die in die vorliegende Offenbarung aufgenommene Offenbarung der gattungsgemäßen Druckschrift verwiesen.

Unter Bezugnahme auf Figur 1 wird eine weitere Ausführungsform beschrieben, bei der der äußere Abschnitt 14 die Rollen 24 umgibt. Die Andruckeinrichtung bzw. - rolle 26 ist hier nicht vorhanden. Eine der diversen Rollen 24 wird hier als Umlenkrolle verwendet, wobei hier die Schleife 42 nicht frei wandern kann, sondern um diese Umlenkrolle herumgeführt wird, während die übrigen Rollen 24 lediglich zur Abstützung und Führung des äußeren Gürtels, der sich auf dem äußeren Abschnitt 14 ausbildet, dienen. Auch hier muß der innere Abschnitt 12 gegenüber dem äußeren mit einer anderen bzw. höheren Drehzahl gedreht werden, um die unterschiedlichen Durchmesser bzw. Umfänge des äußeren Gürtels und des inneren Gürtels berücksichtigen zu können.

Dabei können die Rollen 24 und insbesondere die verwendete Umlenkrolle selbst ebenfalls um die Drehachse der Basis drehbar, vorzugsweise auch gegenüber dem äußeren Abschnitt 14 gesondert drehbar, ausgebildet sein. Dies soll verhindern, das der äußere Gürtel nicht übermäßig dick wird und kontinuierlich Fotopapier in passendem Umfang auf den inneren Gürtel übertragen wird.

## Patentansprüche

1. Speicher für Fotomaterial mit einer um eine Achse (30) drehbaren Basis (20, 120, 220);
- mit einer am Außenumfang der Basis angeordneten Zuführeinrichtung (16, 116);
- mit einer an der Achse (30, 130) der Basis (20, 120, 220) angeordneten Abzugseinrichtung (18, 118);
- wobei zwei Fotomaterialgürtel auf-/abgewickelt werden, und zwar einer nahe der Achse (30, 130) und einer nahe dem Außenumfang der Basis (20, 120), wobei eine Schleife (42) zwischen den Gürteln zu einem Fotomaterialaustausch vom Außengürtel auf den Innengürtel führt, wobei sich bevorzugt die Wickelrichtung umkehrt,
dadurch **gekennzeichnet**, daß die Basis (20, 120) in zwei Abschnitte (12, 14; 112, 114; 212, 214) unterteilt ist, wobei der eine Abschnitt (14; 114; 214) den anderen Abschnitt (12; 112: 212) umgibt.

2. Speicher nach Anspruch 1, dadurch **gekennzeichnet**, daß die zwei Abschnitte (12, 14; 112, 114; 212, 214) unabhängig um die Achse (30, 130) drehbar sind.

3. Speicher nach einem der Ansprüche 1 oder 2, dadurch **gekennzeichnet**, daß die zwei Abschnitte (12, 14; 112, 114; 212, 214) zueinander verriegelbar bzw. synchron bewegbar sind.

4. Speicher nach einem der Ansprüche 1 bis 3, dadurch **gekennzeichnet**, daß wenigstens einer der Abschnitte, insbesondere der äußere Abschnitt (14; 114; 214), zur Achse (30; 130) wenigstens bereichsweise hin geneigt (250, 252) ist.

5. Speicher nach Anspruch 4, dadurch **gekennzeichnet**, daß der äußere Abschnitt bzw. der innere Abschnitt wenigstens bereichsweise im Querschnitt teilkreisförmig, konkav, konvex oder dergleichen ausgebildet ist.

6. Speicher nach dem Oberbegriff des Anspruchs 1 bzw. einem der Ansprüche 1 bis 5, dadurch **gekennzeichnet**, daß am Außenbereich des äußeren Abschnitts (14; 114; 214) wenigstens eine Andruckrolle insbesondere im Bereich der Zuführeinrichtung (16; 116) angeordnet ist, die vorzugsweise nicht mit der Basis (20; 120; 220) bzw. dem äußeren Abschnitt (14; 114; 214) mit trägt.

7. Speicher nach Anspruch 6, dadurch **gekennzeichnet**, daß in insbesondere regelmäßigen Abständen entlang des Außenumfangs des äußeren Abschnitts bzw. der Basis Andruckrollen vorgesehen sind.

8. Speicher nach Anspruch 6, dadurch **gekennzeichnet**, daß in insbesondere regelmäßigen Abstanden am Innenumfang des äußeren Abschnitts (12, 114, 214) Rollen (24) vorgesehen sind, wobei die Schleife um eine der Rollen, die als Umlenkrolle arbeitet, geführt ist, während der Außengürtel um die Rollen (24) ausgebildet wird.

9. Speicher nach einem der Ansprüche 6 bis 8, dadurch **gekennzeichnet**, daß die Andruckrollen bzw. Rollen insbesondere synchron antreibbar sind.

10. Speicher nach einem der Ansprüche 6 bis 9, dadurch **gekennzeichnet**, daß um die Andruckrollen ober- und/oder unterhalb der Randebene der Basis ein Band angeordnet ist, das bevorzugt angetrieben ist.

11. Speicher nach einem der Ansprüche 6, 7, 9 oder 10 dadurch **gekennzeichnet**, daß die Andruckrollen bzw. das Band durch Federeinrichtungen radial nach innen belastet sind.

12. Speicher nach einem der Ansprüche 1 bis 11, dadurch **gekennzeichnet**, daß zwei Speicher in Kombination, bspw. übereinander angeordnet sind.
